# EUROPÄISCHE PATENTANMELDUNG

(11) **EP 0 596 856 A1**
(43) Veröffentlichungstag der Anmeldung: **11.05.1994**
(21) Anmeldenummer: 93890210.3
(22) Anmeldetag: 27.10.1993
(51) Int. Cl.: B01D 33/21, B01D 33/073, B01D 33/46, B01D 33/68, B01D 33/72, B01D 33/76, B01D 29/15, B01D 29/52, B01D 29/86, B01D 29/90

(54) **Verfahren und Vorrichtung zur Filtration**

(30) Priorität: 06.11.1992 AT 2193/92
(71) Anmelder: Andritz-Patentverwaltungs-Gesellschaft m.b.H., A-8045 Graz (AT)
(72) Erfinder: Koch, Manfred, Dr., A-8045, Graz (AT); Riemer, Hubert, Ing., A-8113 St. Oswald (AT)
(74) Vertreter: Schweinzer, Friedrich

(57) **Zusammenfassung**

Die Erfindung betrifft Verfahren und Vorrichtungen zur Filtration von Feststoff-Flüssigkeits-Mischungen, insbesondere von Feststoff-Flüssigkeits-Suspensionen mit leicht sedimentierenden Stoffen, insbesondere unter Verwendung eines Drehfilters, beispielsweise unter Überdruck bzw. in einem Druckbehälter. Die Erfindung ist vornehmlich dadurch gekennzeichnet, daß eine zur (natürlichen bzw. üblichen) Filtrierbewegung zusätzliche Bewegung der bzw. in der Mischung, insbesondere Suspension durchgeführt wird. Zweckmäßigerweise ist eine erfindungsgemäße Filtriervorrichtung, insbesondere mit Drehfiltern, beispielsweise in einem Druckbehälter, zur Durchführung des Verfahrens dadurch gekennzeichnet, daß zumindest eine, vorzugsweise teilweise offene, Aufgabeeinrichtung (4), insbesondere (ein) Aufgaberohr(e) für die Mischungs- bzw. Suspensionszufuhr vorgesehen ist, sowie daß eine Einrichtung (5,5',6,7,26) zur zusätzlichen Beeinflussung der natürlichen bzw. üblichen Filtrierbewegung der bzw. in der Mischung bzw. Suspension, insbesondere zur Erzeugung einer Strömung, vorgesehen ist.

## Beschreibung

Die Erfindung betrifft Verfahren und Vorrichtungen zur Filtration von Feststoff-Flüssigkeits-Mischungen, insbesondere von Feststoff-Flüssigkeits-Suspensionen mit leicht sedimentierenden Stoffen, insbesondere unter Verwendung eines Drehfilters, beispielsweise unter Überdruck bzw. in einem Druckbehälter.

Es sind viele Verfahren und Vorrichtungen zur Filtration bekannt. Dazu werden vornehmlich Drehfilter, d.h. Scheiben- und Trommelfilter eingesetzt. Für leicht sedimentierende Stoffe werden häufig auch teure Vakuumbandfilter benutzt. Dabei ergibt sich ein sehr unregelmäßiger Filterkuchenaufbau. Demzufolge werden große Luftmengen benötigt. Es ist daher Ziel der Erfindung, insbesondere beim Einsatz der an sich günstigen Drehfilter (Scheiben- bzw. Trommelfilter), die Problematik des ungleichmäßigen Filterkuchenaufbaues und insbesondere der Sedimentationsneigung von Feststoff-Flüssigkeit-Mischungen, insbesondere -Suspensionen, im Filterbehälter bzw. Filtertrog zu lösen. Derartige Probleme treten vor allem im Bereich der Mineralienaufbereitung bei der Filtration von Kohlesuspensionen, Erzsuspensionen wie Kupfer-, Blei-, Zink-, Pyrit-, Magnetit-, Magnesitsuspensionen sowie auch bei verschiedensten Sanden, Erdschlämmen und der Entsorgung kontaminierter Böden auf.

Gemäß der Erfindung wird bei der Filtration eine zur - natürlichen bzw. üblichen - Filtrierbewegung zusätzliche Bewegung der bzw. in der Mischung, insbesondere Suspension, durchgeführt. Diese zusätzliche Bewegung der bzw. in der Mischung bzw. Suspension kann gemäß der Erfindung durch einen Mischungs- bzw. SuspenSionsüberlauf und bzw. oder einen Mischungs- bzw. Suspensionsablauf erzielt werden. Durch diese Bewegung kann die Mischung bzw. Suspension ausreichend im vermischten Zustand erhalten und dabei filtriert werden. Die Überlaufmenge (Differenz zwischen Zulaufmenge und filtrierter Mischungs- bzw. Suspensionsmenge) bzw. der Überlauf dient ebenfalls einer Vergleichmäßigung des Feststoffanteils in der Flüssigkeit bzw. der Homogenisierung der Mischung bzw. Suspension.

Gemäß einer weiteren Ausgestaltung der Erfindung kann die zusätzliche Bewegung durch Rühren oder durch zusätzliches Eindüsen von Feststoff-Flüssigkeits-Mischung bzw. von Feststoff-Flüssigkeits-Suspension erzeugt werden.

Eine weitere Ausbildung der Erfindung ist dadurch gekennzeichnet, daß die zusätzliche Bewegung der Mischung bzw. Suspension als Strömung gegen die Richtung der Mischungs- bzw. Suspensionsaufgabe ausgebildet ist. In diesem Fall werden die schweren, zur Sedimentation neigenden Teilchen, insbesondere die sonst zu schnell sedimentierenden Teilchen, durch die Strömung in Schwebe gehalten und gleichmäßig anfiltriert.

Eine günstige Fortbildung der Erfindung ist dadurch gekennzeichnet, daß die Überlaufmenge der Mischung bzw. Suspension dem Mischungs- bzw. Suspensionszulauf wieder zugeführt wird. Eine derartige Schaltung ermöglicht eine besonders günstige Regelung der Zulaufmenge bzw. -geschwindigkeit, wodurch ein schnelles Sedimentieren verhindert werden kann.

Eine weitere und besonders günstige Ausgestaltung der Erfindung ist dadurch gekennzeichnet, daß ein Teil der Mischung bzw. Suspension am untersten Punkt bzw. im untersten Bereich des Filters, insbesondere Drehfilters, bzw. des Filterbehälters abgezogen wird. Gemäß einer Weiterführung der Erfindung wird der abgezogene Teil der Mischung bzw. Suspension wieder dem Zulauf zugeführt. Damit wird erreicht, daß auch am untersten Punkt bzw. im untersten Bereich des Troges und somit über die gesamte Fläche eine Strömung aufrechterhalten wird und eine Sedimentation unterbleibt. Die abgezogene Menge kann in einfacher Weise zirkuliert werden und gemeinsam mit der Überlaufmenge dem Mischungs- bzw. Suspensionszulauf zugegeben werden.

Es wird erfindungsgemäß weiters eine Filtriervorrichtung, insbesondere mit Drehfiltern, beispielsweise in einem Druckbehälter, zur Durchführung des erfindungsgemäßen Verfahrens vorgeschlagen, die dadurch gekennzeichnet ist, daß zumindest eine, vorzugsweise teilweise offene Aufgabeeinrichtung, insbesondere ein Aufgaberohr, für die Mischungs- bzw. Suspensionszufuhr vorgesehen ist, sowie daß eine Einrichtung zur zusätzlichen Beeinflussung der natürlichen bzw. üblichen Filtrierbewegung der bzw. in der Mischung bzw. Suspension, insbesondere zur Erzeugung einer Strömung, vorgesehen ist. Durch die erfindungsgemäße Aufgabeeinrichtung sowie die Einrichtung zur zusätzlichen Beeinflussung der Bewegung der Mischung bzw. Suspension kann eine die Sedimentation abbremsende Strömung und somit eine Homogenisierung der Mischung bzw. Suspension bzw. Trübe erreicht werden.

Die zusätzliche Beeinflussung der Bewegung der Mischung bzw. Suspension kann erfindungsgemäß durch einen Überlauf, ein Rührwerk, eine Düse für die zusätzliche Zufuhr von Feststoff-Flüssigkeits-Mischung bzw. -Suspension und bzw. oder einen zusätzlichen Mischungs- bzw. Suspensionsabzug erzielt werden. Überlaufrinnen werden derzeit nur für "Notfälle" verwendet, wohingegen diese beim vorliegenden erfindungsgemäßen Verfahren bzw. bei der erfindungsgemäßen Vorrichtung einen konstanten Überlauf aufnehmen müssen. Durch eine teilweise offene Aufgabeeinrichtung, insbesondere Aufgaberohre, kann die Mischung bzw. Suspension in optimaler Weise in den Trog geleitet werden.

Eine vorteilhafte Ausbildung der Erfindung ist dadurch gekennzeichnet, daß die Aufgabeeinrichtung, insbesondere ein Aufgaberohr, an einem Ausschnitt eine gezahnte Überlaufkante aufweist. Als eine weitere erfindungsgemäße Ausgestaltung wird vorgeschlagen, daß die Aufgabeeinrichtung an ihrer Unterseite Ablauföffnungen, insbesondere Ablaufbohrungen, aufweist. Durch die gezahnte Kante kann die Mischung bzw. Suspension in einem gelenkten Strahl in den Filtertrog geleitet werden, wobei eine Sedimentation in der Aufgabeeinrichtung durch die Ablauföffnungen an der Unterseite weitestgehend vermieden werden kann.

Eine günstige Form der Erfindung ist dadurch gekennzeichnet, daß im Bereich der Aufgabeeinrichtung für den Mischungs- bzw. Suspensionszulauf Leitbleche zur gezielten Einbringung der Mischung bzw. Suspension in den Filterbehälter, insbesondere Filtertrog, vorgesehen sind. Diese Leitbleche können gemäß einer weiteren Ausgestaltung unter die Mischungs- bzw. Suspensionsoberfläche im Filterbehälter bzw. Filtertrog reichen. Durch die Verwendung von Leitblechen, die insbesondere unter die Mischungs- bzw. Suspensionsoberfläche reichen, kann die Mischungs- bzw. Suspensionszufuhr in den Filtertrog relativ langsam erfolgen, wodurch keine Verwirbelungen und somit auch keine Abschwemmungen bereits anfiltrierten Feststoffes entstehen.

Gemäß einer weiteren Ausgestaltung der Erfindung steht der Überlauf bzw. die Überlaufrinne über einen Mischungs- bzw. Suspensionsvorlagebehälter und eine Zuführpumpe mit der mindestens einen Mischungs- bzw. Suspensionsaufgabeeinrichtung in Verbindung. Durch diese Schaltung kann in günstiger Weise eine Zirkulation des Materials erreicht und eine günstige Regelmöglichkeit für die Austrittsmenge geschaffen werden.

Gemäß einer weiteren günstigen Variante der Erfindung wird an der Unterseite bzw. im unteren Bereich des Filterbehälters, insbesondere Filtertroges des Drehfilters, eine Ablauföffnung vorgesehen, die über einen Mischungs- bzw. Suspensionsvorlagebehälter und eine Zuführpumpe mit der mindestens einen Mischungs- bzw. Suspensionsaufgabeeinrichtung in Verbindung steht. Durch den Ablauf an der Unterseite bzw. im unteren Bereich des Filterbehälters, z.B. eines Filtertroges, wird eine kontinuierliche Strömung nach unten erzeugt und somit ebenfalls eine Sedimentation verhindert.

Eine günstige Weiterbildung der Erfindung wird dadurch erreicht, daß mindestens eine Leiteinrichtung im Filterbehälter, insbesondere Filtertrog eines Drehfilters, auf der vom mindestens einen Rührwerk bzw. von der mindestens einen Mischungs- bzw. Suspensionsdüse abliegenden Seite vorgesehen ist. Durch diese Leiteinrichtung können sonst "tote Ecken" im Filtertrog und somit die Gefahr einer örtlichen Sedimentation verhindert werden.

Gemäß einer weiteren günstigen Ausgestaltung der Erfindung ist mindestens eine Leiteinrichtung, insbesondere in Form eines Leitbleches, im Bereich zwischen dem mindestens einen Rührwerk bzw. der mindestens einen Mischungs- bzw. Suspensionsdüse und rotierenden Filter- bzw. Siebelementen des Drehfilters od.dgl. vorgesehen. Durch derartige Leiteinrichtungen wird ein Abschwemmen von bereits anfiltriertem Feststoff durch die durch das Rührwerk bzw. die Mischungs- bzw. Suspensionsdüse erzeugte Turbulenz wirkungsvoll unterbunden. Diese Leiteinrichtung setzt sich bei Scheibenfiltern vorteilhaft in Blechen parallel zur Filterscheibe fort, um auch hier einen Abschwemmschutz zu bilden. Je nach zu filtrierendem Gut bzw. auch nach den konstruktiven Verhältnissen kann das Rührwerk bzw. die Mischungs- bzw. Suspensionsdüse auf der Mischungs- bzw. Suspensionszufuhrseite bzw. auf der Filterkuchenabnahmeseite angeordnet sein. Durch die geeignete Wahl der Anordnung kann einerseits eine Homogenisierung der Suspension erreicht und anderseits ein Abschwemmen von bereits anfiltriertem Feststoff unterbunden werden.

Der Überlauf kann gemäß der Erfindung als Rinne oder als ein unter der Mischungs- bzw. Suspensionsoberfläche mündendes Rohr ausgebildet sein. In beiden Fällen wird das Mischungs- bzw. Suspensionsniveau durch die Höhe der Einlaufkante des Überlaufes bestimmt, wobei das Rohr auch in der Höhe variabel ausgeführt sein kann.

Eine weitere Ausführung der Erfindung ist dadurch gekennzeichnet, daß bei Verwendung eines Scheibenfilters das mindestens eine Rührwerk bzw. die mindestens eine Mischungs- bzw. Suspensionsdüse in der Ebene und unterhalb der Filterscheibe(n) angebracht ist. Dies findet besonders vorteilhaft bei Einscheibenfiltern Anwendung. Insbesondere bei Verwendung eines Mehrscheibenfilters kann erfindungsgemäß das mindestens eine Rührwerk bzw. die mindestens eine Mischungs- bzw. Suspensionsdüse neben der Filterscheibe, insbesondere zwischen (je) zwei Filterscheiben angebracht sein. Es wird dadurch eine besonders günstige Strömung entlang der Filterscheiben erzielt.

Besondere zusätzliche Beeinflussungen der Zusatzbewegungen in der Mischung bzw. Suspension lassen sich erfindungsgemäß dadurch erzielen, daß für den Strömungserzeuger, insbesondere ein Rührwerk, ein Strömungsrohr vorgesehen ist, in dem es angeordnet sein kann. Dabei läßt sich der Effekt von Zusatzbewegungen der bzw. in der Mischung bzw. Suspension besonders verstärken bzw. gestalten, wenn an bzw. nahe der Mündung des Strömungsrohres die Mischung bzw. Suspension nach oben und zu den Filterscheiben umlenkende Leiteinrichtungen vorgesehen sind.

Die Erfindung läßt sich nicht nur bei Scheibenfiltern, sondern auch bei Trommelfiltern, Flachbettfiltern und Kerzenfiltern anwenden.

Erfindungsgemäß ist vorteilhaft bei Verwendung eines Trommelfilters im Filtertrog ein Schwenkrührwerk zwischen dem Trommelfiltermantel und der Troginnenwand angeordnet. Demgegenüber wird gemäß einer weiteren Weiterbildung der Erfindung bei einem Flachbettfilter ein Flachrührwerk oberhalb des Filters im Filterbehälter angeordnet.

Eine weitere Variante der Erfindung ist Schließlich dadurch charakterisiert, daß bei einem, gegebenenfalls unter Überdruck betriebenen, Kerzenfilter unterhalb der unteren Enden der Filterkerzen ein Rührwerk bzw. aufwärts gerichtete Düsen zur Einbringung einer zusätzlichen Feststoff-Flüssigkeit-Mischung bzw. -Suspension angeordnet sind und die Filtratabsaugung an die Innenräume der Filterkerzen angeschlossen ist.

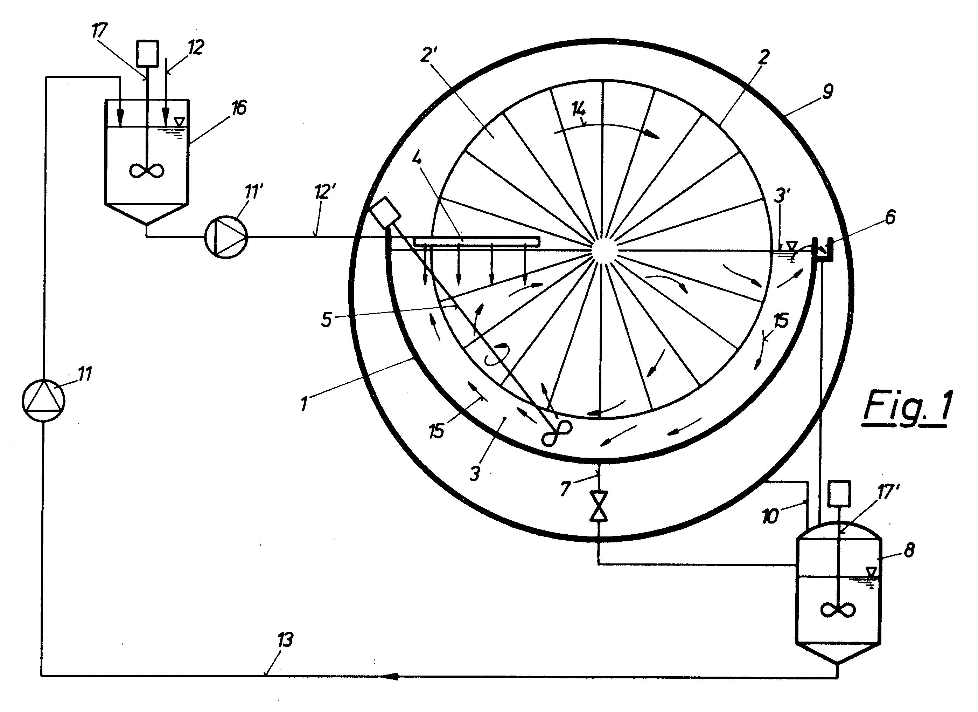

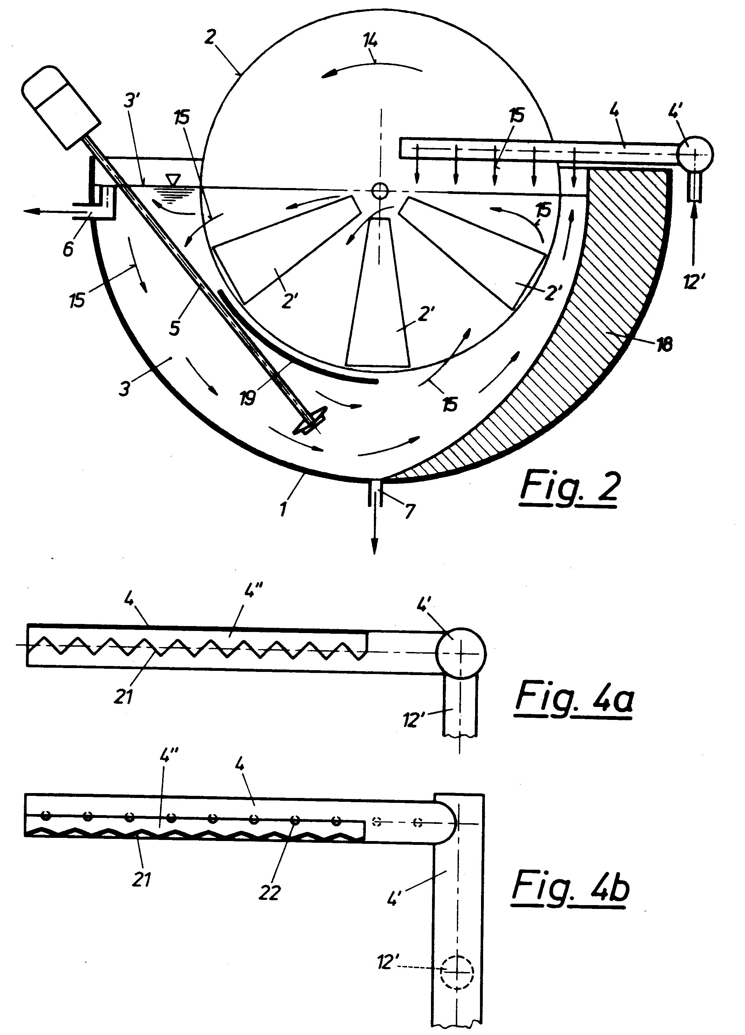

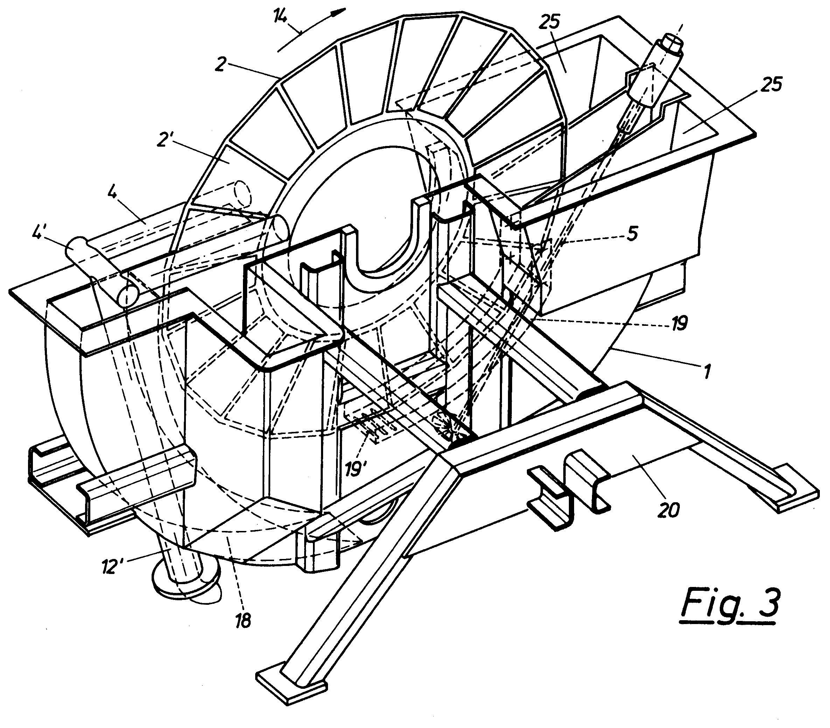

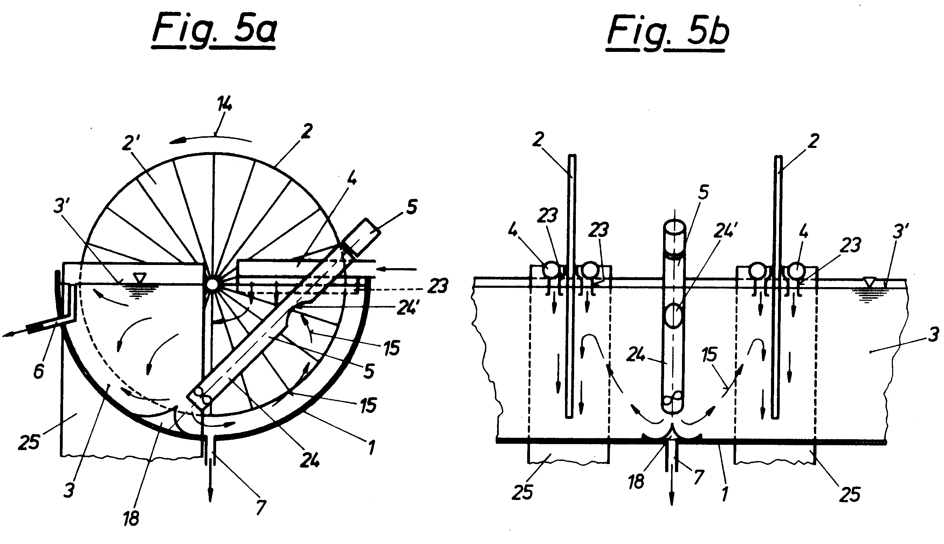

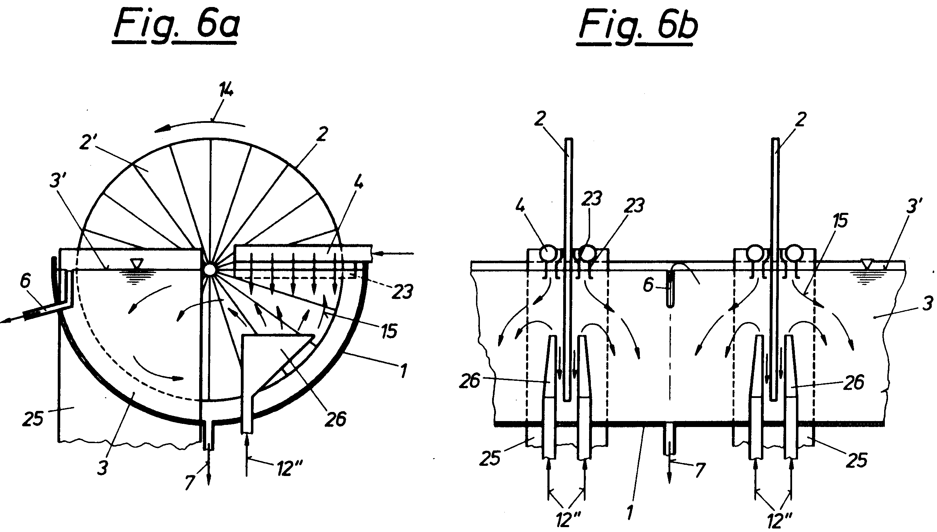

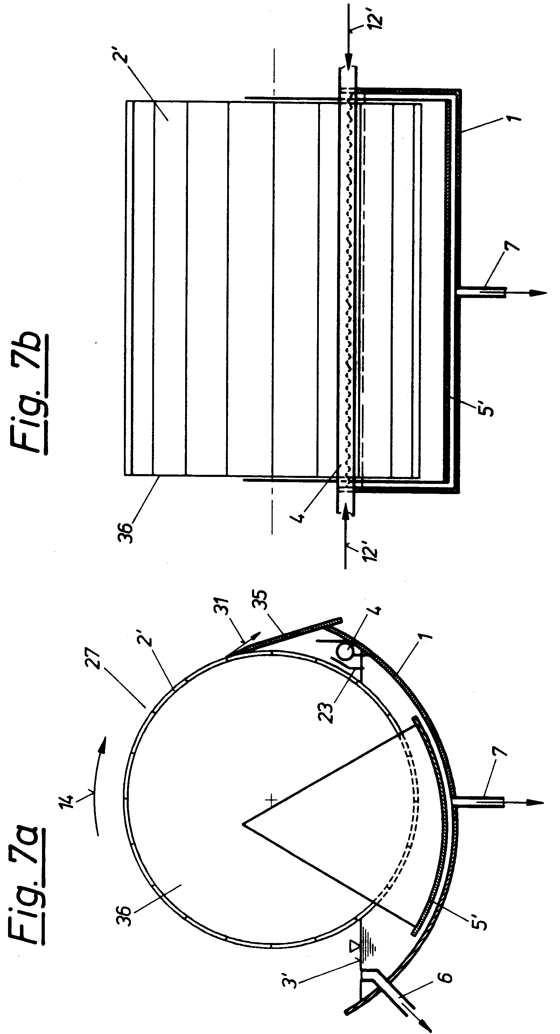

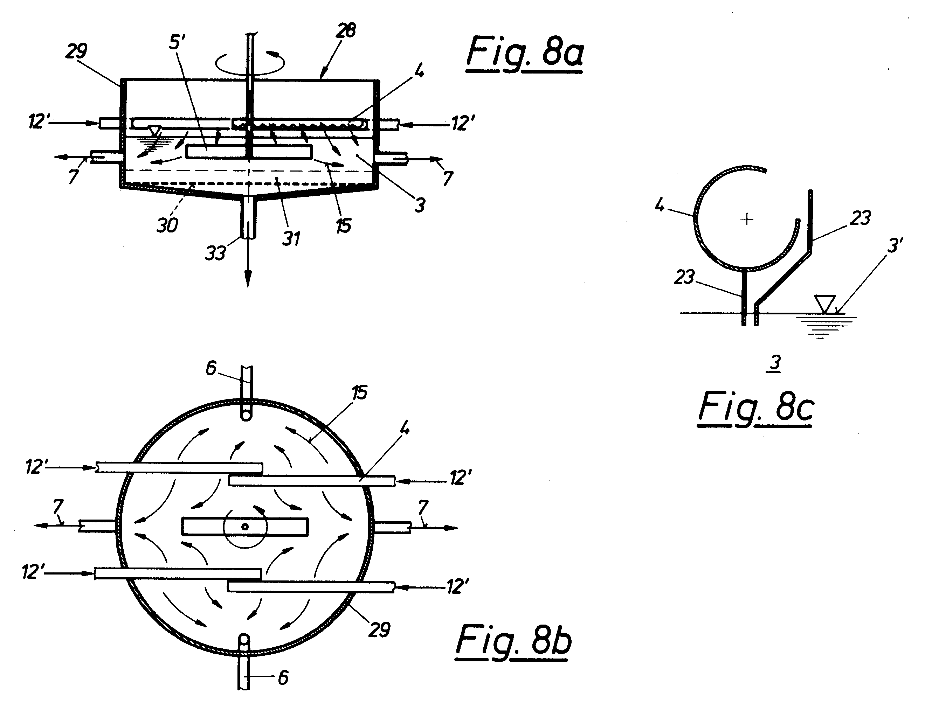

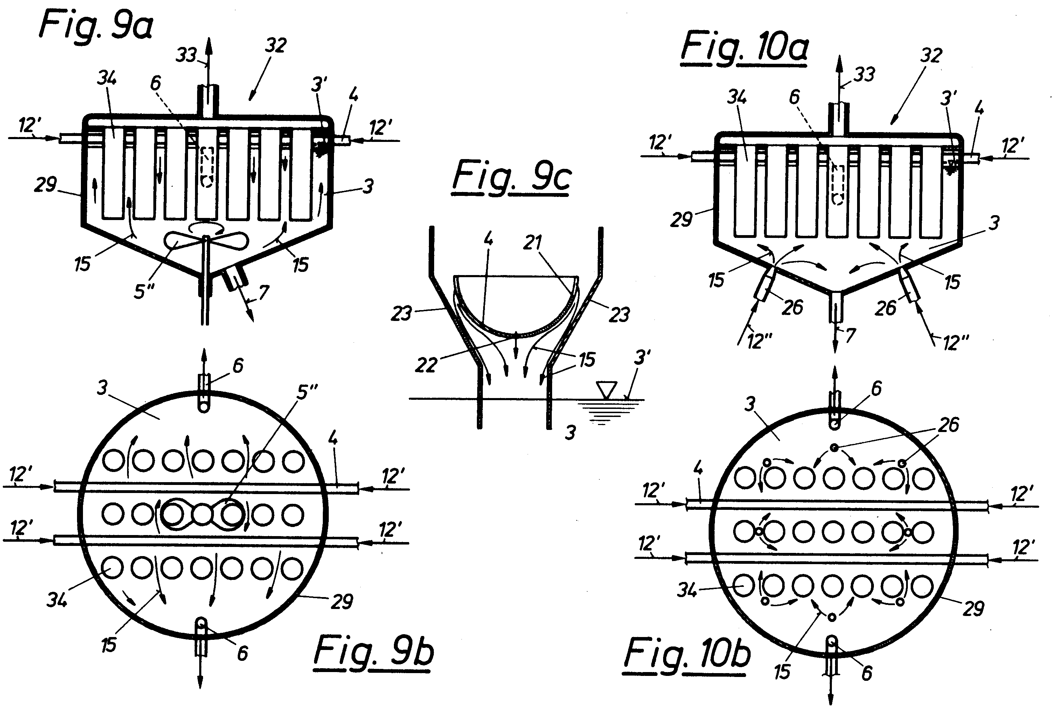

Die Erfindung wird nun im folgenden anhand von Zeichnungen beispielhaft beschrieben, wobei Fig. 1 eine Variante der Erfindung mit einem Drehfilter, Fig. 2 eine weitere Variante der Erfindung mit einem Scheibenfilter, Fig. 3 eine 3D-Darstellung der Variante von Fig. 2, die Fig. 4a,b Ansichten einer erfindungsgemäßen Aufgaberinne, die Fig. 5a,b Ansichten einer Variante der Erfindung bei einem Mehrscheibenfilter, die Fig. 6a,b Ansichten einer weiteren Variante bei einem Mehrscheibenfilter, die Fig. 7a,b Ansichten einer erfindungsgemäßen Variante mit einem Trommelfilter, die Fig. 8a,b Ansichten einer Variante mit einem Flachbettfilter, Fig. 8c einen Schnitt durch eine Aufgaberinne bei einem Flachbettfilter gemäß Fig. 8a,b, die Fig. 9a,b Ansichten einer Variante der Erfindung bei einem Kerzenfilter, Fig. 9c eine erfindungsgemäße Aufgaberinne für eine Variante gemäß den Fig. 9a,b und die Fig. 10a,b eine weitere Variante der Erfindung bei einem Kerzenfilter darstellen.

Eine erste Ausführungsvariante der Erfindung wird an Hand der Fig. 1 beschrieben. Es wird hiebei ein Filtertrog 1 eines Scheibenfilters innerhalb eines Druckkessels 9 gezeigt. In den Filtertrog 1 ist eine Feststoffsuspension 3 eingebracht worden, die leicht zur Sedimentation neigt. Eine Filterscheibe 2 aus einer Vielzahl von Filtersegmenten 2' dreht sich dabei in Richtung 14, wobei das Filtrat durch ein auf den Filtersegmenten 2' befestigtes Filtermedium, z.B. aus Kunststoff, Fasermaterial, ummantelte Glasfasern, Keramikgewebe oder auch Metall (Siebe!), hindurch in die hohlen Filtersegmente 2' und durch die (nicht dargestellte) hohle Filterwelle abgesaugt und der Feststoff an die Oberfläche angelagert wird, bis der entstandene Filterkuchen in üblicher Weise, z.B. durch Druckluftrückstoß oder Schaber, abgenommen wird. Die zu filtrierende Suspension wird über eine Leitung 12 in einen Suspensionsvorlagebehälter 16 mit einem Rührwerk 17 eingeleitet und durch eine Suspensionspumpe 11' über die Suspensionszufuhrleitung 12' zu einer, insbesondere speziellen, Aufgabeeinrichtung 4 und- von dort in den Filtertrog 1 eingebracht. Spezielle Aufgabeeinrichtungen werden später an Hand der Fig. 4a,4b, 5a,5b, 6a,6b, 8c und 9c beschrieben. Zur Verhinderung einer (zu) schnellen Sedimentation wird erfindungsgemäß durch ein Rührwerk 5 eine Strömung 15 der Suspension erzeugt, die der natürlichen bzw. üblichen Strömung der Suspension nach Suspensionsaufgabe entgegenwirkt. Zur Unterstützung der Strömung 15 wird ein Teil der Suspension über eine Überlaufrinne 6 und am Boden des Filtertroges 1 über einen Suspensionsabzug 7 in einen Suspensionssammelbehälter 8 mit Rührwerk 17' geleitet. Wird die Anordnung in einem Druckkessel 9 betrieben, so ist der Raum zwischen Druckkessel 9 und Suspensionssammelbehälter 8 an eine Druckausgleichsleitung 10 angeschlossen. Die Suspension wird dann durch eine Suspensionspumpe 11 über eine Suspensionsrückführleitung 13 in den Suspensionsvorlagebehälter 16 geleitet. Durch eine derartige Verfahrensführung wird eine (zu) schnelle Sedimentation der Feststoffteilchen in der Suspension 3 bzw. im Trog 1 bzw. auf dem Filtermedium verhindert, wodurch ein gleichmäßiger Aufbau des Filterkuchens auf den Filtermedien der Filtersegmente 2' und dadurch eine gleichmäßige Filtration mit geringem Luftverbrauch und geringer Verstopfungsneigung des Filtermediums durch die feinen Feststoffteilchen erzielt wird. Eine allfällige Sedimentation am Boden des Filtertroges 1 wird durch den Suspensionsabzug 7 verhindert.

Eine weitere Ausführungsform der Erfindung ist aus Fig. 2 ersichtlich. Hier findet die Filtration in der Atmosphäre bzw. unter normalem Atmosphärendruck statt. Die Suspension wird hier von der Suspensionszufuhr 12' über ein Zuführrohr 4' in die Aufgabeeinrichtung 4 geleitet. Das Rührwerk 5 ist hier auf der von der Aufgabe abgewandten Seite der Filterscheibe 2 angebracht. Der Überlauf wird durch ein Überlaufrohr 6 abgeleitet, wobei die Höhe der Suspensionsoberfläche 3' durch die Oberkante des Überlaufrohres 6 bestimmt wird. Zur Vermeidung von Toträumen ist an der Aufgabeseite der Filterscheibe 2 -im Filtertrog 1 eine Leiteinrichtung 18 vorgesehen, welche die Form eines an den Trog angepaßten Keiles hat, der sich zur Aufgabe hin erweitert. Dadurch wird auch in diesem Bereich die Strömungsrichtung 15 der Suspension 3 bestimmt. Um ein Abwaschen des bereits gebildeten Filterkuchens von der Filterscheibe zu verhindern, ist eine weitere Leiteinrichtung in Form eines Leitbleches 19 vorgesehen, das aus einem Teil besteht, der sich an den Umfang der Filterscheibe 2 anpaßt, sowie Seitenteile parallel zur Filterscheibe 2 und im Abstand von deren Oberfläche(n) aufweist.

Um eine Sedimentation am Boden dieses Leitbleches 19 zu verhindern, sind Leitblechöffnungen 19' z.B. in der Form von Löchern oder Schlitzen vorgesehen. Diese sind in der 3D- bzw. axionometrischen Darstellung einer erfindungsgemäßen Vorrichtung in Fig. 3 erkennbar. Hier ist weiters das Haltegerüst 20 für den Filtertrog 1 dargestellt. Auch der Filterkuchenabwurfschacht 25 auf beiden Seiten der Filterscheibe 2 ist hier ersichtlich. Die übrigen Teile sind mit den gleichen Bezugszeichen wie in Fig. 2 versehen.

Eine bevorzugte Ausführung der Aufgabeeinrichtung 4 bei der Ausbildung nach den Fig. 2 und 3 ist in den Fig. 4a und 4b in Seitenansicht (Fig. 4a) und in Draufsicht (Fig. 4b) dargestellt. Es handelt sich hier um zwei parallele Rohre, die oben teilweise bei 4'' ausgeschnitten sind. Die Suspension rinnt hier über eine gezackte Überlaufkante 21 am seitlichen Rand dieser Ausschnitte 4'' in die im Filtertrog 1 befindliche Suspension 3. Um eine Sedimentation am Boden dieser Aufgabeeinrichtung 4 zu verhindern, sind dort Ablauföffnungen, z.B. in Form von Löchern 22 oder auch Schlitzen vorgesehen.

Für eine weitere beispielsweise Anwendung der Erfindung bei einem Mehrscheibenfilter wird eine Verfahrensführung und Vorrichtung gemäß den Fig. 5a (Seitenansicht) und 5b (Stirnansicht) vorgeschlagen. Abweichend von der vorher dargestellten Ausführungsform wird hier ein Strömungsrohr 24 für das Rührwerk 5 verwendet, das auch dort bzw. in diesem Rohr 24 eingesetzt werden kann. Die Form der Leiteinrichtung 18 wird hier derart gewählt, daß die Suspension an den das Rührwerk 5 benachbarten Filterscheiben 2 nach oben strömt und somit die aus der Aufgabeeinrichtung 4 laufende Suspension abbremst und eine schnelle Sedimentation verhindert. Um an der Suspensionsoberfläche 3' möglichst wenig Turbulenzen zu erzeugen, rinnt die Suspension von der Aufgabevorrichtung 4 an Leitblechen 23, die unter die Suspensionsoberfläche 3' reichen, in die Suspension 3. Der Suspensionsabzug 7 kann, wie hier dargestellt, am Boden des Filtertroges 1 erfolgen, jedoch auch an anderer Stelle des Filtertroges 1, an der bevorzugt eine Sedimentation auftritt. Die in Fig. 5b dargestellte Anordnung wiederholt sich bei mehr als zwei Filterscheiben 2 entsprechend, so daß auf jeder Seite einer Filterscheibe 2 eine aufwärts gerichtete Strömung 15 der Suspension auftritt und somit eine schnelle Sedimentation, insbesondere der schwereren Feststoffteilchen der Suspension 3 verhindert wird.

Eine andere Ausführung zur Erzeugung der zusätzlichen, gerichteten Strömung 15 der bzw. in der Suspension 3 ist in den Fig. 6a und 6b gezeigt. Über eine weitere Suspensionszufuhr 12'' wird durch eine Suspensionsdüse 26 Suspension direkt in die im Filtertrog 1 befindliche Suspension 3 eingedüst, wobei durch die kinetische Energie dieser eingedüsten Suspension eine Strömung 15 erzeugt wird, die gegen die Hauptaufgaberichtung der Suspension gerichtet ist. Die übrigen Teile entsprechen den in den anderen dargestellten Varianten gezeigten.

Eine Anordnung mit einem Trommelfilter 27 ist in Fig. 7a und 7b dargestellt. Die Filtersegmente 2' sind dabei am Mantel der zylinderförmigen Filtertrommel 36 verteilt. Im Filtertrog 1 ist zur Erzeugung der zusätzlichen Bewegung der bzw. in der Suspension ein Schwenkrührwerk 5' angebracht. Statt dieses Rührwerks 5' kann eine über die Länge der Filtertrommel 36 reichende Suspensionsdüse oder mehrere kleinere Suspensionsdüsen verwendet werden, um die erforderliche zusätzliche Bewegung der Suspension zur Verhinderung der Sedimentation zu erzielen. Weiters wird durch den Suspensionsüberlauf 6 bzw. den Suspensionsabzug 7 am Boden des Filtertroges 1 eine Sedimentation wirkungsvoll verhindert. Die Abnahme des Filterkuchens 31 von der Filtertrommel 36 erfolgt hier mittels eines Schabers 35, wobei auch andere bekannte Arten der Filterkuchenabnahme eingesetzt werden können.

Als weitere Variante für die Anwendung der Erfindung ist in den Fig. 8a und 8b ein Flachbettfilter 28 dargestellt. Am Boden des Filterbehälters 29 bildet sich auf einem Filtermedium 30 ein Filterkuchen 31. Um einen gleichmäßigen Aufbau dieses Filterkuchens 31 zu erreichen und eine Verstopfung des Filtermediums 30 zu verhindern, kann auch hier eine zusätzliche Strömung 15 der bzw. in der Suspension 3 erzeugt werden. Diese Strömung wird durch einen gezielten Suspensionsabzug 7 und einen Suspensionsüberlauf 6 unterstützt. Ein Rührwerk, das hier als Flachrührwerk 5' ausgebildet ist, hält dabei die Suspension in Schwebe und homogenisiert sie, bevor sie auf den Filter bzw. das Filtermedium bzw. den bereits anfiltrierten Filterkuchen 31 gelangt. Das Filtrat wird unterhalb des Filtermediums 30 durch ein Rohr 33 abgeführt. Fig. 8c zeigt einen Schnitt durch eine für ein Flachbettfilter 28 mögliche Aufgabevorrichtung 4 samt Leitblechen 23, die unter die Oberfläche 3' der Suspension 3 reichen.

Eine weitere erfindungsgemäße Alternative stellt ein Kerzenfilter 32 dar, das in speziellen Ausführungen auch unter Druck betrieben werden kann. Hiezu ist in den Fig. 9a und 9b eine Möglichkeit der zusätzlichen Strömungserzeugung dargestellt. Im unteren Bereich des Filterbehälters 29 wird die Strömung 15 mittels eines Rührwerkes 5'' erzeugt. Die Suspension 3 wird hier über Aufgabeeinrichtungen 4 in den Filterbehälter 29 eingebracht, wobei das Filtrat durch die Filterkerzen 34 hindurchgesaugt und durch eine Leitung 33 aus dem Kerzenfilter 32 abgeleitet wird. Ein Überlauf 6 und ein Suspensionsabzug 7 unterstützen auch hier die Strömung 15 zur Verhinderung der Sedimentation. Die an den Filterkerzen 34 anfiltrierten Feststoffteilchen werden nach einiger Zeit nach Stoppen der Suspensionszufuhr und einer dadurch erfolgten Nachfiltration sowie gegebenenfalls einer Druckentlastung des Filterbehälters z.B. durch einen Druckluftrückstoß oder einen Filtratrückstoß abgeworfen und aus dem Filterbehälter 29 ausgetragen bzw. außerhalb des Filterbehälters abgeworfen. Fig. 9c zeigt hiezu eine mögliche Variante der Aufgabeeinrichtung 4, die eine gezackte Überlaufkante 21 und Ablaufbohrungen 22 aufweist. Die Suspension rinnt dann großteils an den Leitblechen 23 in die Suspension 3.

Die Fig. 10a und 10b veranschaulichen die Möglichkeit der Erzeugung einer Strömung 15 durch Einbringen einer zusätzlichen Suspension 12'' durch mehrere, gleichmäßig am Boden des Filterbehälters 29 verteilte und aufwärts gerichtete Suspensiondüsen 26.

Was oben für Suspensionen dargelegt wurde, kann weitestgehend auch für andere Feststoff-Flüssigkeit-Mischungen erfindungsgemäß Anwendung finden, insbesondere dann, wenn die Feststoff-Komponente(n) der Mischung dazu neigt(en), sich aus der Flüssigkeit zu schnell abzusondern bzw. abzusetzen; erfindungsgemäß wird weitestgehend verhindert, daß die Feststoff-Komponente(n) der Mischung die Filter bzw. Siebe zu schnell zum Teil oder ganz zumachen bzw. deren Poren bzw. Öffnungen zu schnell schließen bzw. einen zu schnellen bzw. unregelmäßigen Filterkuchenaufbau bzw. eine Verstopfung des Filtermediums ergeben.

Die dargestellten Beispiele zeigen mögliche Varianten, erheben aber keinen Anspruch auf Vollständigkeit. Die Erfindung ist überall dort mit Vorteil anwendbar, wo es darum geht, die Komponenten von Feststoff-Flüssigkeitsmischungen ökonomisch und möglichst rasch mittels Filtern, Sieben od.dgl. zu trennen; die Erfindung ist insbesondere in Fällen einzusetzen, wo die Feststoffe die Neigung haben, sich zu schnell - insbesondere während des Trennvorganges - abzusetzen, also die Öffnungen bzw. Poren von Filtern oder Siebelementen zuzumachen, also zu sedimentieren. Ziel der Erfindung ist es somit, in ausreichendem Maße beim Trennen bzw. Filtrieren der Komponenten der Feststoff-Flüssigkeits-Mischung, insbesondere der Feststoff-Flüssigkeits-Suspension die Homogenität der Mischung bzw. Suspension im Filtertrog od.dgl. aufrechtzuerhalten.

### Bezeichnungen und Bezugszeichen:

- 1: Filtertrog
- 2: Filterscheibe
- 2': Filtersegment
- 3: Suspension
- 3': Suspensionsoberfläche
- 4: Aufgabeeinrichtung
- 4': Zuführrohr
- 4'': Ausschnitt
- 5: Rührwerk
- 5': Schwenkrührwerk
- 5'': Rührwerk im Kerzenfilter
- 6: Überlaufrinne, -rohr
- 7: Suspensionsabzug
- 8: Suspensionssammelbehälter
- 9: Druckkessel
- 10: Druckausgleichsleitung
- 11,11': Suspensionspumpe
- 12,12' 12'': Suspensionszufuhr
- 13: Suspensionsrückführung
- 14: Drehrichtung des Filters
- 15: Strömungsrichtung der Suspension
- 16: Suspensionsvorlagebehälter
- 17,17': Behälterrührwerke
- 18: Leiteinrichtung (Keil)
- 19: Leitblech
- 19': Leitblechöffnungen
- 20: Haltegerüst für Filtertrog
- 21: Überlaufkante der Aufgabeeinrichtung
- 22: Ablauföffnungen der Aufgabeeinrichtung
- 23: Leitbleche für Suspensionszufuhr
- 24: Strömungsleitrohr für Rührwerk
- 24': Ansaugöffnung im Strömungsleitrohr
- 25: Filterkuchenabwurfschacht
- 26: Suspensionsdüse
- 27: Trommelfilter
- 28: Flachbettfilter
- 29: Filterbehälter
- 30: Filtermedium
- 31: Filterkuchen
- 32: Kerzenfilter
- 33: Filtratabfuhr
- 34: Filterkerzen
- 35: Schaber
- 36: Filtertrommel

## Patentansprüche

1. Verfahren zur Filtration von Feststoff-Flüssigkeits-Mischungen, insbesondere von Feststoff-Flüssigkeits-Suspensionen mit leicht sedimentierenden Stoffen, insbesondere unter Verwendung eines Drehfilters beispielsweise unter Überdruck, dadurch gekennzeichnet, daß eine zur (natürlichen bzw. üblichen) Filtrierbewegung zusätzliche Bewegung der bzw. in der Mischung, insbesondere Suspension durchgeführt wird.

2. Verfahren nach Anspruch 1, dadurch gekennzeichnet, daß die zusätzliche Bewegung der bzw. in der Mischung, insbesondere Suspension durch einen Mischungs- bzw. Suspensionsüberlauf und bzw. oder einen Mischungs- bzw. Suspensionsabzug erzielt wird.

3. Verfahren nach Anspruch 1 oder 2, dadurch gekennzeichnet, daß die zusätzliche Bewegung der Mischung, insbesondere Suspension durch Rühren erzeugt wird.

4. Verfahren nach Anspruch 1 oder 2, dadurch gekennzeichnet, daß die zusätzliche Bewegung der Mischung, insbesondere Suspension durch zusätzliches Eindüsen von Feststoff-Flüssigkeit-Mischung insbesondere -Suspension erzeugt wird.

5. Verfahren nach einem der Ansprüche 1 bis 4, dadurch gekennzeichnet, daß die zusätzliche Bewegung der Mischung bzw. Suspension als Strömung gegen die Richtung der Mischungs- bzw. Suspensionsaufgabe ausgebildet ist.

6. Verfahren nach einem der Ansprüche 2 bis 5, dadurch gekennzeichnet, daß die Überlaufmenge der Mischung bzw. Suspension dem Mischungs- bzw. Suspensionszulauf wieder zugeführt wird.

7. Verfahren nach einem der Ansprüche 2 bis 6, dadurch gekennzeichnet, daß ein Teil der Mischung bzw. Suspension am untersten Punkt bzw. im untersten Bereich des Filters, insbesondere Drehfilters, bzw. Filterbehälters, abgezogen wird.

8. Verfahren nach Anspruch 7, dadurch gekennzeichnet, daß der abgezogene Teil der Mischung bzw. Suspension dem Zulauf wieder zugeführt wird.

9. Filtriervorrichtung, insbesondere mit Drehfiltern, beispielsweise in einem Druckbehälter, zur Durchführung des Verfahrens nach einem der Ansprüche 1 bis 8, dadurch gekennzeichnet, daß zumindest eine, vorzugsweise teilweise offene, Aufgabeeinrichtung (4), insbesondere (ein) Aufgaberohr(e) für die Mischungs- bzw. Suspensionszufuhr vorgesehen ist, sowie daß eine Einrichtung (5,5' 6,7,26) zur zusätzlichen Beeinflussung der natürlichen bzw. üblichen Filtrierbewegung der bzw. in der Mischung bzw. Suspension, insbesondere zur Erzeugung einer Strömung, vorgesehen ist.

10. Vorrichtung nach Anspruch 9, dadurch gekennzeichnet, daß zur zusätzlichen Beeinflussung der Bewegung der Mischung bzw. Suspension ein Überlauf (6) vorgesehen ist.

11. Vorrichtung nach Anspruch 9 oder 10, dadurch gekennzeichnet, daß zur zusätzlichen Beeinflussung der Filtrierbewegung mindestens ein Rührwerk (5,5',5'') vorgesehen ist.

12. Vorrichtung nach Anspruch 9 oder 10, dadurch gekennzeichnet, daß zur zusätzlichen Beeinflussung der Filtrierbewegung mindestens eine Düse (26) für die zusätzliche Zufuhr von Feststoff-Flüssigkeit-Mischung bzw. Suspension und bzw. oder ein zusätzlicher Mischungs- bzw. Suspensionsabzug vorgesehen ist (sind).

13. Vorrichtung nach einem der Ansprüche 9 bis 12, dadurch gekennzeichnet, daß die zumindest eine Aufgabeeinrichtung (4), insbesondere ein Aufgaberohr, an einem Ausschnitt (4'') eine gezahnte Überlaufkante (21) aufweist.

14. Vorrichtung nach einem der Ansprüche 9 bis 13, dadurch gekennzeichnet, daß die Aufgabeeinrichtung (4), insbesondere das Aufgaberohr, an ihrer bzw. seiner Unterseite Ablauföffnungen, insbesondere Ablaufbohrungen (22) aufweist.

15. Vorrichtung nach einem der Ansprüche 9 bis 14, dadurch gekennzeichnet, daß im Bereich der Aufgabeeinrichtung (4), insbesondere von Aufgaberohren, für den Mischungs- bzw. Suspensionszulauf Leitbleche (23) zur gezielten Einbringung der Mischung bzw. Suspension in den Filterbehälter (29), insbesondere Filtertrog (1) eines Drehfilters, vorgesehen sind.

16. Vorrichtung nach Anspruch 15, dadurch gekennzeichnet, daß die Leitbleche (23) unter die Mischungs- bzw. Suspensionsoberfläche (3') im Filterbehälter (29), insbesondere Filtertrog (1), reichen.

17. Vorrichtung nach einem der Ansprüche 9 bis 16, dadurch gekennzeichnet, daß der Überlauf (6) über einen Mischungs- bzw. Suspensionsvorlagebehälter (8,16) und eine Zuführpumpe (11,11') mit der mindestens einen Mischungs- bzw. Suspensionsaufgabeeinrichtung (4) in Verbindung steht.

18. Vorrichtung nach einem der Ansprüche 9 bis 17, dadurch gekennzeichnet, daß an der Unterseite bzw. im unteren Bereich des Filterbehälters (29), insbesondere Filtertroges (1) eines Drehfilters, eine Ablauföffnung (7) vorgesehen ist, die über einen Mischungs- bzw. Suspensionsvorlagebehälter (8,16) und eine Zuführpumpe (11,11') mit der mindestens einen Mischungs bzw. Suspensionsaufgabeeinrichtung (4) in Verbindung steht.

19. Vorrichtung nach einem der Ansprüche 9 bis 18, dadurch gekennzeichnet, daß mindestens eine Leiteinrichtung (18) im Filterbehälter (29), insbesondere im Filtertrog (1) eines Drehfilters, auf der vom mindestens einen Rührwerk (5) bzw. der mindestens einen Mischungs- bzw. Suspensionsdüse (26) abliegenden Seite vorgesehen ist.

20. Vorrichtung nach einem der Ansprüche 9 bis 19, dadurch gekennzeichnet, daß mindestens eine Leiteinrichtung insbesondere in Form eines Leitbleches (19) im Bereich zwischen dem mindestens einen Rührwerk (5) bzw. der mindestens einen Mischungs- bzw. Suspensionsdüse (26) und Filter- bzw. Siebelementen (2',34), insbesondere rotierenden Filter- bzw. Siebelementen (2') eines Drehfilters od.dgl., vorgesehen ist, wobei sich Leitbleche bei Scheibenfiltern parallel zur Filterscheibe fortsetzen können.

21. Vorrichtung nach einem der Ansprüche 9 bis 20, unter Verwendung eines Drehfilters, dadurch gekennzeichnet, daß das mindestens eine Rührwerk (5) bzw. die mindestens eine Mischungs- bzw. Suspensionsdüse (26) auf der Mischungs- bzw. Suspensionszufuhrseite angeordnet ist.

22. Vorrichtung nach einem der Ansprüche 9 bis 20, unter Verwendung eines Drehfilters, dadurch gekennzeichnet, daß das mindestens eine Rührwerk (5) bzw. die- mindestens eine Mischungs- bzw. Suspensionsdüse (26) auf der Filterkuchenabnahmeseite angeordnet ist.

23. Vorrichtung nach einem der Ansprüche 9 bis 22, dadurch gekennzeichnet, daß der Überlauf (6) als Rinne ausgebildet ist.

24. Vorrichtung nach einem der Ansprüche 9 bis 22, dadurch gekennzeichnet, daß der Überlauf (6) als unter der Mischungs- bzw. Suspensionsoberfläche (3') mündendes, gegebenenfalls in der Höhe verstellbares, Rohr ausgebildet ist.

25. Vorrichtung nach einem der Ansprüche 9 bis 24, unter Verwendung eines Scheibenfilters, dadurch gekennzeichnet, daß das mindestens eine Rührwerk (5) bzw. die mindestens eine Mischungs- bzw. Suspensionsdüse (26) in der Ebene und unterhalb der Filterscheibe(n) (2) angebracht ist.

26. Vorrichtung nach einem der Ansprüche 9 bis 24, unter Verwendung eines Scheibenfilters, insbesondere Mehrscheibenfilters, dadurch gekennzeichnet, daß das mindestens eine Rührwerk (5) bzw. die mindestens eine Mischungs- bzw. Suspensionsdüse (26) neben der Filterscheibe (2), insbesondere zwischen (je) zwei Filterscheiben (2) angebracht ist.

27. Vorrichtung nach einem der Ansprüche 9 bis 26, dadurch gekennzeichnet, daß für den Strömungserzeuger, insbesondere ein Rührwerk (5,5'), ein Strömungsrohr (24) vorgesehen ist, in dem es angeordnet sein kann.

28. Vorrichtung nach Anspruch 27, dadurch gekennzeichnet, daß an bzw. nahe der Mündung des Strömungsrohres (24) die Mischung bzw. Suspension nach oben und zu den Filterscheiben umlenkende Leiteinrichtungen (18) vorgesehen sind.

29. Vorrichtung nach einem der Ansprüche 9 bis 28, dadurch gekennzeichnet, daß bei Verwendung eines Trommelfilters (27) im Filtertrog (1) ein Schwenkrührwerk (5') zwischen dem Trommelfiltermantel und der Troginnenwand angeordnet ist.

30. Vorrichtung nach einem der Ansprüche 9 bis 20, 23, 24, 27, 28, dadurch gekennzeichnet, daß bei einem Flachbettfilter (28) ein Flachrührwerk (5') oberhalb des Filters im Filterbehälter (29) angeordnet ist.

31. Vorrichtung nach einem der Ansprüche 9 bis 20, 23, 24, 27, 28, dadurch gekennzeichnet, daß bei einem, gegebenenfalls unter Überdruck betriebenen, Kerzenfilter (32) unterhalb der unteren Enden der Filterkerzen (34) ein Rührwerk (5'') bzw. aufwärts gerichtete Düsen (26) zur Einbringung einer zusätzlichen Feststoff-Flüssigkeit-Mischung bzw. -Suspension angeordnet sind und die Filtratabsaugung an die Innenräume der Filterkerzen angeschlossen ist.
